# EUROPEAN PATENT SPECIFICATION

(11) **EP 2 147 812 B1**
(45) Date of publication and mention of the grant of the patent: **08.08.2012**
(21) Application number: 08161089.1
(22) Date of filing: 24.07.2008
(51) Int. Cl.: B60H 1/00, B60H 1/32

(54) **Air conditioning device for a transport vehicle and a corresponding transport vehicle**
Klimaanlagenvorrichtung für ein Transportfahrzeug und zugehöriges Transportfahrzeug
Dispositif de climatisation pour véhicule de transport et véhicule de transport correspondant

(43) Date of publication of application: 27.01.2010
(73) Proprietor: Iveco France S.A., 69200 Vénissieux (FR)
(72) Inventor: Belkouche, Yazid Yaniss, 69008, LYON (FR)
(74) Representative: Borsano, Corrado

(56) References cited:
- EP-A- 1 331 113
- WO-A-98/34807
- DE-A1- 3 501 738
- DE-U1-202006 010 428

## Description

The present invention relates to an air conditioning device for a transport vehicle, and a transport vehicle provided with such an air conditioning device.

The particular, but not exclusive, subject of the invention is transport vehicles whose journey comprises at least one station stop, during which people are likely to get onto this vehicle, or else to get off it. According to the invention, this vehicle may if necessary be guided on an exclusive lane, particularly by means of electric wires, rails or else optical means. Such a transport vehicle conventionally comprises a chassis mounted on at least one axle supporting rolling members, which are most frequently wheels provided with tyres.

The more particular subject of the invention is such transport vehicles whose traction is provided by an internal combustion engine. In these conditions, such transport vehicles include mainly, but not exclusively, motorbuses, trolley buses, trams or else coaches.

Normally, the air conditioning device fitted to these vehicles comprises a compressor from which extends a loop-shaped tubular duct in which a refrigerant circulates. The latter successively passes through a condensation stage, then an evaporation stage in which it provides the refrigeration necessary to cool the air of the vehicle.

This known solution however has certain disadvantages.

Therefore, it is not very satisfactory in ecological terms, since it uses a considerable quantity of refrigerant. This is due to the fact that the aforementioned tubular duct has considerable dimensions, because it extends substantially over the whole length of the vehicle, so as to air condition the various zones of the latter. Finally, this solution induces a notable overconsumption of energy, since it is accompanied by a substantial increase in fuel consumption.

Also known, from the closest prior art document WO-A-98/34807, is an air conditioning system for a vehicle in which there is an absorption cooling cycle. The steam generator is connected to the cooling circuit of the engine which may, as an alternative, be connected to a heating circuit of the vehicle. Consequently heat is provided by drawing it from the engine coolant. This solution however has certain disadvantages. Specifically, for the absorption cycle to be correctly supplied, the heat source must be at high temperature. Consequently, the temperature of the coolant of the solution described in WO-A-98/34807 places the engine of the vehicle in conditions where the internal combustion produces harmful emissions, particularly nitrogen oxides, so that such a vehicle cannot comply with severe depollution standards.

This being said, the object of the invention is to remedy these various disadvantages.

Accordingly, its subject is an air conditioning device according to Claim 1, appended. Advantageous features of the invention are the subject of subsidiary Claims 2 to 7.

A further subject of the invention is a transport vehicle according to Claim 8 appended. Advantageous features of this vehicle are the subject of Claims 9 to 11.

The invention will be better understood and other advantages of the latter will appear more clearly in the light of the following description of an embodiment of a transport vehicle according to its principle, given only as a nonlimiting example and made with reference to the appended drawings in which:
- Figure 1 is a view in perspective, illustrating schematically a transport vehicle, and an air conditioning device according to the invention, that is fitted to this vehicle;
- Figure 2 is a schematic view, illustrating more precisely a main cold production zone equipping the air conditioning device of Figure 1; and
- Figure 3 is a view in cross section, illustrating an air diffuser equipping the transport vehicle of Figure 1.

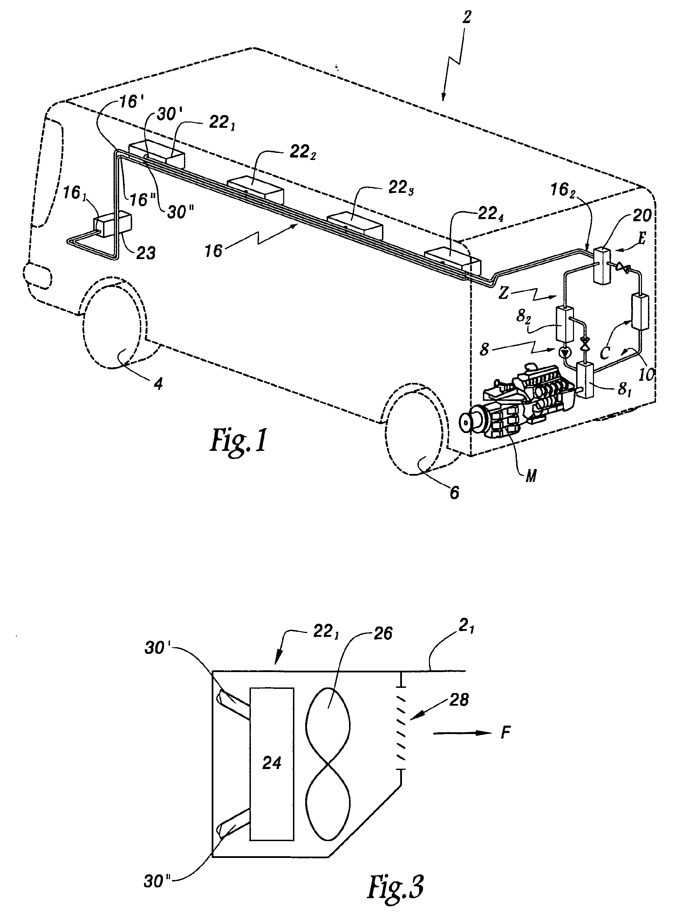

The transport vehicle illustrated in Figure 1, which is for example a motorbus, a trolley bus, a tram or else a coach, comprises in a manner known per se a body shell 2, which is represented schematically in dot-and-dash lines. This body shell is mounted in a conventional manner on two axles respectively front and rear that are fitted with rolling members. In the example illustrated, the latter are wheels mounted on tyres, respectively given reference numbers 4 and 6 for the front and rear axles. Therefore, in Figure 1, the front portion of the transport vehicle is shown on the left, while its rear portion is shown on the right.

The air conditioning device equipping this transport vehicle comprises first of all a main cold production zone Z placed at the rear of this vehicle. This zone Z is provided with a chemical compressor 8, which will be described in greater detail below. The chemical compressor 8 is suitable for drawing its operating energy from several sources, as will be described below.

The cold production zone Z also comprises a loop-shaped tubular duct 10, in which a refrigerant called the main refrigerant circulates. This loop extends from the aforementioned compressor 8, only in the rear portion of the transport vehicle. It traverses successively a condensation stage C, and an evaporation stage E, which comprises in particular an exchanger 20. The various mechanical and thermodynamic members of these stages C and E are of a type known per se, so that they are described briefly above.

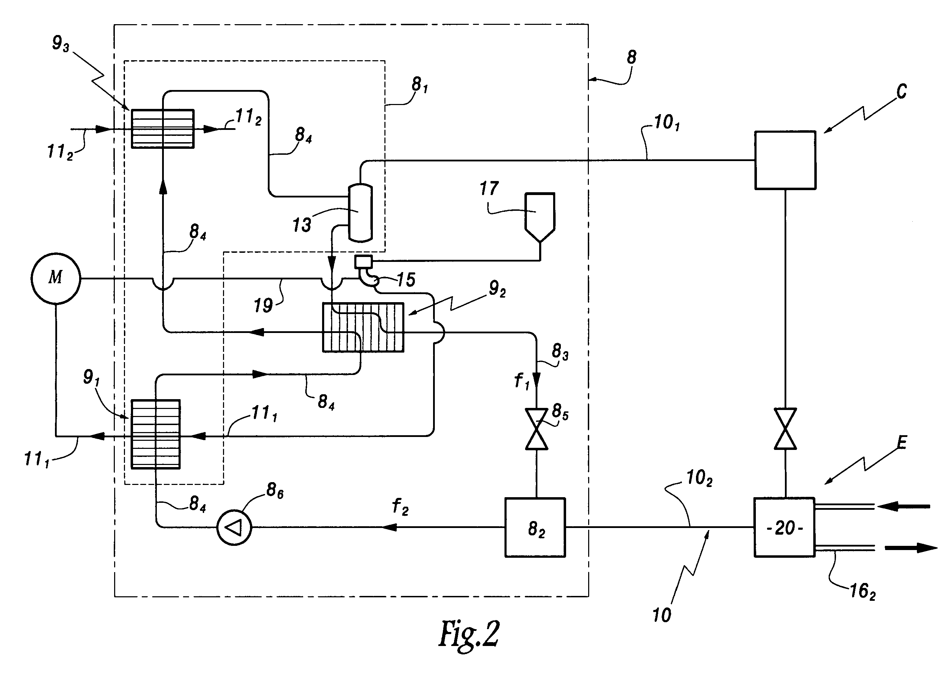

Figure 2 illustrates more precisely the main zone Z and, in particular, the compressor 8 that is fitted to it. This chemical compressor 8 comprises a multi-stage boiler 8₁, an absorber 8₂, and two lines 8₃ and 8₄ connecting this boiler and this absorber. One of these lines 8₃ is provided with a pressure reducer 8₅, while the other of these lines 8₄ is fitted with an electric pump 8₆ supplied for example by the alternator (not shown) of the vehicle engine.

More precisely, the boiler 8₁ comprises a first exchanger 9₁, with a structure known per se. This exchanger 9₁ makes it possible to place in heat exchange, on the one hand, the fluid circulating in the line 8₄ and, on the other hand, the engine coolant circulating in a line 11₁, forming a loop. Downstream of this first exchanger, the line 8₄ leads into a second exchanger 9₂, whose operation will appear more clearly below. Finally, this line 8₄ traverses a third exchanger 9₃ in which the fluid that it carries is in heat exchange with the exhaust gases of the engine M, which circulate in a conventional exhaust duct 11₂.

Finally, the line 8₄ leads into a vessel 13, heated by means of a top-up burner 15, which is itself supplied by an independent reservoir 17. This reservoir, which is distinct from the main reservoir of the vehicle, advantageously contains a biofuel. This burner 15 is suitable for heating the liquid contained in the engine cooling circuit. Accordingly, a line 19, belonging to the loop 11₁, is provided making it possible to have the coolant, which is particularly water, pass close to the flame produced by the burner.

From the vessel 13, there extends a line 10₁ belonging to the loop 10, which connects the condensation stage C. In addition, the line 8₃, mentioned hereinabove, connects this vessel 13 to the absorber 8₂, while being in heat exchange with the line 8₄, in the second exchanger 9₂ described above.

Figure 2 shows the loop 10, described with reference to Figure 1, and the condensation stage C and the evaporation stage E. As described above, this loop has a portion 10₁ extending between the boiler 8₁ and the condensation stage C, and a portion 10₂ connecting the evaporation stage E and the absorber 8₂.

In service, the chemical compressor 8 receives a mixture formed of the main refrigerant and its solvent. In the example illustrated, the main refrigerant is water, while the solvent is a salt, for example LiClO₃, namely lithium chloride. This water and this salt are capable of forming a binary mixture. In Figure 2, the boiler 8₁ is materialized by dotted lines while the chemical compressor 8 is materialized in its entirety by dot-and-dash lines.

At the entrance to the boiler 8₁, namely upstream of the line 8₄ immediately after the pump 8₆, there is a solution rich in refrigerant. Then, during its journey in the boiler, this so-called solution receives several supplies of heat from successive sources.

Therefore, from its passage in the exchanger 9₁, this solution receives first a certain quantity of heat originating from the engine cooling water. Typically, this rich solution rises for example from a value of 53°C upstream of this exchanger to a value of 95°C downstream of the latter. Simultaneously, the engine water is cooled, namely it changes from a typical value of 97°C to a typical value of 94°C. Cooling the engine water also has an advantage in that it makes it possible to delay the starting of the radiator.

Then, during its passage in the exchanger 9₂, the rich solution circulating in the line 8₄ receives an additional quantity of heat through it being placed in heat contact with the hotter weak solution circulating in the duct 8₃, as will be described in greater detail below. Downstream of this exchanger 9₂, the rich solution has a typical value of 105°C, that is it has been heated from 95°C as has been seen above.

Then, the rich solution circulating in the line 8₄ receives an additional quantity of heat from the engine exhaust gases, in the exchanger 9₃. Therefore, this rich solution is reheated, from a value of 105°C to a typical temperature of 115°C.

Finally, downstream of the exchanger 9₃, the rich solution circulating in the line 8₄ is allowed into the vessel 13, within which the burner 15 provides an additional quantity of latent heat. Downstream of the vessel, the rich solution is divided into two flows, namely a flow of refrigerant and a weakened solution of such a fluid.

This refrigerant thus isolated circulates in the line 10₁ in the form of steam, at a substantially unchanged temperature of 115°C, in the direction of the condensation stage C. After having passed through the pressure reducer 8₅, this main refrigerant yields its units of heat reduction in a conventional manner, in the evaporation stage E, before being returned to the absorber 8₂ via the portion 10₂ of the loop.

It will be noted that the use of the burner 15 makes it possible to perform two functions: the first, as seen above, is to provide latent heat and the second lies in its use as an engine preheating system. This preheating prevents having the engine run for a long time in order to reach its operating temperature. In this way, the overall consumption of the vehicle is reduced because the energy economy achieved on the engine is greater than the energy provided by the top-up burner.

At the same time, under the effect of pressure, the solution weak in refrigerant, substantially formed of pure liquid salt, circulates along the loop 8₃ in the direction of the arrow f₁. This weak solution reheats the rich solution in the exchanger 9₂ as seen above, before being admitted into the pressure reducer 8₅ and then into the absorber 8₂. This weak solution then again absorbs the main refrigerant that is present in the portion 10₂ of the loop 10.

The mixture of main refrigerant and salt, that is reformed in the absorber 4, again forms a rich solution which then circulates in the line 8₄ thanks to the pump 8₆, in order to be returned to the boiler 8₁ in the direction of the arrow f₂. The cycle described above then recommences, in order to cause the main refrigerant to start circulating in the loop 10.

The air conditioning device according to the invention also comprises an auxiliary loop 16, in which an auxiliary fluid circulates, such as water containing an additive, in particular glycolated water. For this purpose, this loop is for example provided with a circulation pump not shown. This auxiliary loop extends generally longitudinally, between the front and the rear of the transport vehicle. Its front end is therefore marked 16₁ and its rear end 16₂.

Furthermore, this rear end 16₂ is placed in a heat exchange relationship with the main loop 10, within the exchanger 20 belonging to the evaporation stage E. It will be noted that this rear end 16₂ is also shown schematically in Figure 2.

In its intermediate portion, the auxiliary loop 16 is placed in heat exchange relationship with roof diffusers, four of which are provided in this instance and are allocated reference numbers 22₁ to 22₄. Finally, at its front end 16₁, the loop 16 is placed in heat exchange relationship with an additional diffuser 23, of a type known per se, which is incorporated into the vehicle dashboard.

Figure 3 illustrates more precisely one 22₁ of the roof diffusers, it being understood that the other three have an identical structure. This diffuser 22₁, which is arranged in the upper portion 2₁ of the vehicle body shell 2, comprises an air inlet not shown, an exchanger 24 of the auxiliary fluid/air type, a fan 26 and a diffuser grid 28. Furthermore, the two branches 16' and 16" of the loop 16, referenced in Figure 1, are provided with respective branch pipes 30' and 30" which enter the exchanger 24.

The main refrigerant circulating in the main loop 10, when in service, provides units of heat reduction as explained above in the evaporation stage E. However, unlike the usual solutions, these units of heat reduction are not delivered directly to the air of the vehicle passenger compartment but are yielded, in the exchanger 20, to the auxiliary fluid circulating in the loop 16.

This auxiliary fluid then transports these units of heat reduction in the direction of the various diffusers 22₁ to 22₄, where they are then yielded to the air of the passenger compartment within the exchangers 24. The admission of air thus conditioned, into the passenger compartment, is materialized by the arrow F in Figure 2.

The invention makes it possible to achieve the objectives previously mentioned.

Therefore, it has a substantial advantage over the prior solutions, in ecological terms. Specifically, the prior art makes use of a fluid that is capable of having a powerful greenhouse effect and/or of being flammable or toxic, which circulates in ducts of considerable dimensions, extending substantially over the whole length of the vehicle.

In the invention, these ducts of considerable dimensions correspond to the auxiliary loop 16, in which the auxiliary fluid circulates, capable of having extremely favourable ecological properties, particularly if it is water-based.

Furthermore, the use of a chemical compressor makes it possible to dispense with a harmful refrigerant in the main loop 10, since this fluid may also be water. This also induces a reduction in fuel consumption because a mechanical compressor is no longer used.

In addition, it is advantageous to provide several heat sources capable of supplying energy to the chemical compressor. Therefore, the presence of these various sources makes it possible to more easily modulate the quantity of energy supplied, while being able to respond to the occasional needs for maximum energy. In certain configurations, particularly that of the urban motorbus, the commercial speed and the recent systems for depolluting the exhaust gases considerably limit the recovery of heat making it possible to supply an absorption system responding to the heat budget of the vehicles. Therefore, the staging of the heating sources, permitted by the boiler of the invention, makes it possible to eliminate these constraints.

The invention is also advantageous, relative to the prior solutions, in terms of heat inertia. Specifically, in the prior art making use of a single cooling loop, the stopping of the diesel engine stops the production of conditioned air after a very short time, of the order of a few seconds. Conversely, thanks to the invention, the presence of the very long auxiliary loop, associated with the inertia of the fluid circulating in this loop, makes it possible to ensure air conditioning for a much longer period, of the order of one minute.

## Claims

1. Air conditioning device for a transport vehicle, particularly of the motorbus, trolley bus, tram or coach type, comprising:
- a main zone (Z) for the production of cold that comprises a compressor (8), a main loop (10) carrying a main refrigerant, and a condensation stage (C) and an evaporation stage (E) traversed by this main loop (10); and
- an auxiliary loop (16) carrying an auxiliary fluid, this auxiliary loop being in heat exchange, on the one hand with the main loop (10) and on the other hand with the air of the passenger compartment of the vehicle to be air conditioned, in which the compressor of the main zone (Z) is a chemical compressor (8) that is suitable for drawing its operating energy from:
- the heat contained in the exhaust gases of the engine (M) of the vehicle;
- the heat contained in the cooling water of the engine of the vehicle; and
- a source of top-up energy (15),
**characterized in that**:
- said chemical compressor (8) comprises a boiler (8₁), an absorber (8₂), and two circulation lines (8₃, 8₄) a first (8₃) of which is provided with a pressure reducer (8₅) and a second (8₄) of which is provided with a pump (8₆), said circulation lines (8₃, 8₄) being designed for the circulation of a mixture between a main refrigerant and its solvent which is a salt, said boiler (8₁) of the chemical compressor (8) is placed in heat-exchange relation with a first exchanger (9₃) in which the exhaust gases of the engine (M) of the vehicle travel, and with a second exchanger (9₁) in which the vehicle engine (M) coolant travels,
- said source being a burner (15), supplied by a tank (17) distinct from the main tank of the vehicle, said burner supplies a vessel (13) into which said second line (8) ends,
- said device comprising a line (19) for the circulation of the coolant of the vehicle engine (M) which extends to the vicinity of said burner (15) so as to preheat said coolant.

2. Air conditioning device according to Claim 1 **characterized in that** the two circulation lines (8₃, 8₄) are placed in mutual heat exchange relation, in an additional exchanger (9₂).

3. Air conditioning device according to one of the preceding claims, **characterized in that** the main refrigerant is water.

4. Air conditioning device according to any one of the preceding claims, **characterized in that** the auxiliary loop (16) is in heat exchange with the main loop (10) in a first exchanger (20), belonging to the evaporation stage (E) of the main zone (Z).

5. Air conditioning device according to any one of the preceding claims, **characterized in that** the auxiliary loop (16) is in heat exchange with the passenger compartment of the vehicle in at least a second exchanger (24), with which at least one diffuser (22₁-22₄) placed in the vehicle passenger compartment is furnished.

6. Air conditioning device according to one of the preceding claims, **characterized in that** the auxiliary fluid is water that may have received an additive, in particular glycol.

7. Air conditioning device according to Claim 5, **characterized in that** the or each diffuser (22₁-22₄) comprises an air intake to be conditioned, the said second exchanger (24), a fan (26) and a grid (28) for discharging the conditioned air to the passenger compartment.

8. Transport vehicle, particularly a motorbus, a trolley bus, tram or coach, comprising a body shell (2) resting on at least one axle associated with rolling members, particularly wheels (4, 6) mounted on the tyres, and an air conditioning device according to any one of the preceding claims.

9. Transport vehicle according to Claim 8, **characterized in that** the main zone (Z) for the production of cold is placed at the rear of this vehicle.

10. Transport vehicle according to Claim 8 or 9, **characterized in that** the auxiliary loop (16) extends substantially over the whole length of this transport vehicle.

11. Transport vehicle according to one of Claims 8 to 10, comprising an air conditioning device according to any one of Claims 5 to 7, **characterized in that** the diffusers (22₁-22₄) are distributed evenly over the length of the transport vehicle.

## Patentansprüche

1. Klimaanlageneinrichtung für ein Transportfahrzeug, insbesondere vom Autobus-, Trolleybus-, Straßenbahn- oder Reisebustyp, umfassend:
- eine Hauptzone (Z) für die Produktion von Kälte, die einen Kompressor (8), einen Hauptkreis (10), der ein Hauptkältemittel führt, und eine Kondensationsstufe (C) und eine Verdampfungsstufe (E), die von diesem Hauptkreis (10) durchquert werden, umfasst; und
- einen Zusatzkreis (16), der ein Zusatzfluid führt, wobei dieser Zusatzkreis in Wärmeaustausch einerseits mit dem Hauptkreis (10) und andererseits mit der Luft des zu klimatisierenden Fahrgastraums des Fahrzeugs steht,
wobei der Kompressor der Hauptzone (Z) ein chemischer Kompressor (8) ist, der dafür geeignet ist, seine Arbeitsenergie zu beziehen aus:
- der Wärme, die in den Abgasen der Maschine (M) des Fahrzeugs enthalten ist;
- der Wärme, die in dem Kühlwasser der Maschine des Fahrzeugs enthalten ist; und
- einer Quelle von Nachfüllenergie (15),
**dadurch gekennzeichnet, dass**:
- der chemische Kompressor (8) einen Boiler (8₁), einen Absorber (8₂) und zwei Zirkulationsleitungen (8₃, 8₄) umfasst, von denen eine erste (8₃) mit einem Druckminderer (8₅) versehen ist und eine zweite (8₄) mit einer Pumpe (8₆) versehen ist, wobei die Zirkulationsleitungen (8₃, 8₄) für die Zirkulation eines Gemisches zwischen einem Hauptkältemittel und dessen Lösungsmittel, welches ein Salz ist, konstruiert ist, wobei der Boiler (8₁) des chemischen Kompressors (8) in Wärmeaustauschbeziehung mit einem ersten Wärmeaustauscher (9₃), den die Abgase der Maschine (M) des Fahrzeugs durchlaufen, und mit einem zweiten Wärmeaustauscher (9₁), den das Kühlmittel der Fahrzeugmaschine (M) durchläuft, angeordnet ist,
- die Quelle ein Brenner (15) ist, der durch einen Tank (17), der von dem Haupttank des Fahrzeugs verschieden ist, versorgt wird, wobei der Brenner ein Gefäß (13) versorgt, in dem die zweite Leitung (8) endet,
- die Einrichtung eine Leitung (19) für die Zirkulation des Kühlmittels der Fahrzeugmaschine (M) umfasst, die sich in die Nachbarschaft des Brenners (15) erstreckt, um das Kühlmittel vorzuwärmen.

2. Klimaanlageneinrichtung nach Anspruch 1, **dadurch gekennzeichnet, dass** die zwei Zirkulationsleitungen (8₃, 8₄) in wechselseitiger Wärmeaustauschbeziehung in einem zusätzlichen Austauscher (9₂) angeordnet sind.

3. Klimaanlageneinrichtung nach einem der vorhergehenden Ansprüche, **dadurch gekennzeichnet, dass** das Hauptkältemittel Wasser ist.

4. Klimaanlageneinrichtung nach einem der vorhergehenden Ansprüche, **dadurch gekennzeichnet, dass** der Zusatzkreis (16) in Wärmeaustausch mit dem Hauptkreis (10) in einem ersten Austauscher (20) steht, der zu der Verdampfungsstufe (E) der Hauptzone (Z) gehört.

5. Klimaanlageneinrichtung nach einem der vorhergehenden Ansprüche, **dadurch gekennzeichnet, dass** der Zusatzkreis (16) in Wärmeaustausch mit dem Fahrgastraum des Fahrzeugs in zumindest einem zweiten Austauscher (24) steht, mit dem zumindest ein Diffusor (22₁-22₄), der in dem Fahrgastraum des Fahrzeugs angeordnet ist, ausgestattet ist.

6. Klimaanlageneinrichtung nach einem der vorhergehenden Ansprüche, **dadurch gekennzeichnet, dass** das Zusatzfluid Wasser ist, dem ein Additiv, insbesondere Glykol, beigemengt sein kann.

7. Klimaanlageneinrichtung nach Anspruch 5, **dadurch gekennzeichnet, dass** der oder jeder Diffusor (22₁-22₄) einen zu klimatisierenden Lufteinlass, den zweiten Austauscher (24), ein Gebläse (26) und ein Gitter (28) für den Austrag der klimatisierten Luft in den Fahrgastraum umfasst.

8. Transportfahrzeug, insbesondere ein Autobus, ein Trolleybus, eine Straßenbahn oder ein Reisebus, der eine Karosserieaußenhaut (2), die auf zumindest einer Achse ruht, zu der Rollelemente, insbesondere Räder (4, 6) mit aufgezogenen Reifen, gehören, und eine Klimaanlageneinrichtung nach einem der vorhergehenden Ansprüche umfasst.

9. Transportfahrzeug nach Anspruch 8, **dadurch gekennzeichnet, dass** die Hauptzone (Z) für die Produktion von Kälte am Heck dieses Fahrzeugs angeordnet ist.

10. Transportfahrzeug nach Anspruch 8 oder 9, **dadurch gekennzeichnet, dass** der Zusatzkreis (16) sich im Wesentlichen über die gesamte Länge dieses Transportfahrzeugs erstreckt.

11. Transportfahrzeug nach einem der Ansprüche 8 bis 10, das eine Klimaanlageneinrichtung nach einem der Ansprüche 5 bis 7 umfasst, **dadurch gekennzeichnet, dass** die Diffusoren (22₁ - 22₄) gleichmäßig über die Länge des Transportfahrzeugs verteilt sind.

## Revendications

1. Dispositif de climatisation pour un véhicule de transport, en particulier un bus, un trolleybus, un tram ou un véhicule de type autocar, comprenant :
une zone principale (Z) pour la production du froid qui comprend un compresseur (8), une boucle principale (10) transportant un réfrigérant principal, et un étage de condensation (C) et un étage d'évaporation (E) traversé par ladite boucle principale (10) ; et
une boucle auxiliaire (16) transportant un fluide auxiliaire, cette boucle auxiliaire étant en échange de chaleur, d'une part avec la boucle principale (10) et d'autre part avec l'air de l'habitacle du véhicule à climatiser, dans lequel le compresseur de la zone principale (Z) est un compresseur chimique (8) qui est approprié pour tirer son énergie de fonctionnement de :
la chaleur contenue dans les gaz d'échappement du moteur (M) du véhicule ;
la chaleur contenue dans l'eau de refroidissement du moteur du véhicule ; et
une source d'énergie provenant de la batterie (15),
**caractérisé en ce que** :
ledit compresseur chimique (8) comprend une chaudière (8₁), un absorbeur (8₂) et deux conduites de circulation (8₃, 8₄), dont une première (8₃) est prévue avec un réducteur de pression (8₅) et dont une deuxième (8₄) est prévue avec une pompe (8₆), lesdites conduites de circulation (8₃, 8₄) étant conçues pour la circulation d'un mélange entre un réfrigérant principal et son solvant qui est un sel, ladite chaudière (8₁) du compresseur chimique (8) est placée en relation d'échange de chaleur avec un premier échangeur (9₃) dans lequel les gaz d'échappement du moteur (M) du véhicule circulent, et avec un second échangeur (9₁) dans lequel le réfrigérant du moteur (M) du véhicule circule,
ladite source étant un brûleur (15), fourni par un réservoir (17) différent du réservoir principal du véhicule, ledit brûleur fournit une cuve (13) dans laquelle ladite seconde conduite (8) se termine,
ledit dispositif comprenant une conduite (19) pour la circulation du réfrigérant du moteur (M) du véhicule qui s'étend jusqu'à proximité dudit brûleur (15) pour préchauffer ledit réfrigérant.

2. Dispositif de climatisation selon la revendication 1, **caractérisé en ce que** les deux conduites de circulation (8₃, 8₄) sont placées en relation d'échange de chaleur mutuel, dans un échangeur supplémentaire (9₂).

3. Dispositif de climatisation selon l'une quelconque des revendications précédentes, **caractérisé en ce que** le réfrigérant principal est de l'eau.

4. Dispositif de climatisation selon l'une quelconque des revendications précédentes, **caractérisé en ce que** la boucle auxiliaire (16) est en échange de chaleur avec la boucle principale (10) dans un premier échangeur (20), appartenant à l'étage d'évaporation (E) de la zone principale (Z).

5. Dispositif de climatisation selon l'une quelconque des revendications précédentes, **caractérisé en ce que** la boucle auxiliaire (16) est en échange de chaleur avec l'habitacle du véhicule dans au moins un second échangeur (24), avec lequel au moins un diffuseur (22₁ - 22₄) placé dans l'habitacle du véhicule est prévu.

6. Dispositif de climatisation selon l'une quelconque des revendications précédentes, **caractérisé en ce que** le fluide auxiliaire est de l'eau qui peut avoir reçu un additif, en particulier du glycol.

7. Dispositif de climatisation selon la revendication 5, **caractérisé en ce que** le ou chaque diffuseur (22₁ - 22₄) comprend une admission d'air à climatiser, ledit second échangeur (24), un ventilateur (26) et une grille (28) pour décharger l'air climatisé dans l'habitacle.

8. Véhicule de transport, en particulier un bus, un trolleybus, un tram ou un autocar, comprenant une coque de carrosserie (2) reposant sur au moins un essieu associé à des éléments de roulement, en particulier des roues (4, 6) montées sur les pneus, et un dispositif de climatisation selon l'une quelconque des revendications précédentes.

9. Véhicule de transport selon la revendication 8, **caractérisé en ce que** la zone principale (Z) pour la production du froid est placée à l'arrière de ce véhicule.

10. Véhicule de transport selon la revendication 8 ou 9, **caractérisé en ce que** la boucle auxiliaire (16) s'étend sensiblement sur toute la longueur de ce véhicule de transport.

11. Véhicule de transport selon l'une quelconque des revendications 8 à 10, comprenant un dispositif de climatisation selon l'une quelconque des revendications 5 à 7, **caractérisé en ce que** les diffuseurs (22₁ - 22₄) sont répartis régulièrement sur toute la longueur du véhicule de transport.
